# EUROPÄISCHE PATENTSCHRIFT

(11) **EP 1 606 157 B1**
(45) Veröffentlichungstag und Bekanntmachung des Hinweises auf die Patenterteilung: **17.10.2007**
(21) Anmeldenummer: 04722823.4
(22) Anmeldetag: 24.03.2004
(51) Int. Cl.: B62D 25/24

(54) **KAROSSERIESTOPFEN**
BODY FILLER PLUG
OBTURATEUR DE CARROSSERIE

(30) Priorität: 27.03.2003 DE 20304994 U
(43) Veröffentlichungstag der Anmeldung: 21.12.2005
(73) Patentinhaber: TRW Automotive Electronics & Components GmbH & Co. KG, 67677 Enkenbach/Alsenborn (DE)
(72) Erfinder: JATZKE, Stefan, 67280 Ebertsheim (DE); BEUMANN, Herbert, 38350 Helmstedt (DE)
(74) Vertreter: Sulzbach, Werner
(86) Internationale Anmeldenummer: PCT/EP2004/003123
(87) Internationale Veröffentlichungsnummer: WO 2004/085231

(56) Entgegenhaltungen:
- EP-A1- 0 631 923
- DE-A1- 3 142 850
- US-A- 4 363 420

## Beschreibung

Die vorliegende Erfindung betrifft einen Stopfen zur Abdichtung von Löchern in einer Fahrzeugkarosserie mit einem zentralen Verschlußabschnitt und einem randseitig angeordneten Eingriffsabschnitt zur Aufnahme von Bereichen der Fahrzeugkarosserie.

Karosseriestopfen dieser Art sind allgemein bekannt. Die Stopfen sind dazu gedacht, in der Fahrzeugkarosserie vorhandene Löcher, die für die Herstellung der Karosserie notwendig sind, gegen Feuchtigkeit und Korrosion zu schützen. Die bekannten Stopfen ermöglichen jedoch keine dauerhafte und vollständige Versiegelung der Löcher. Das Dokument EP 0 631 923 A zeigt einem Karosseriestopfen nach der Oberbegriff des Anspruchs 1

Die Erfindung schafft demgegenüber deinen preisgünstig herstellbaren Karosseriestopfen, der leicht zu montieren ist und eine vollständige Versiegelung der Blechkanten auch bei unterschiedlichen Blechdicken und Kragenlochhöhen ermöglicht. Der erfindungsgemäße Karosseriestopfen ist zudem sowohl vor als auch nach der Lackierung der Fahrzeugkarosserie anwendbar.

Erfindungsgemäß wird hierzu ein Stopfen zur Abdichtung von Löchern in einer Fahrzeugkarosserie mit einem zentralen Verschlußabschnitt und einem randseitig angeordneten Eingriffsabschnitt zur Aufnahme von Bereichen der Fahrzeugkarosserie bereitgestellt, bei dem der Verschlußabschnitt und der Eingriffsabschnitt aus einem Kunststoffmaterial gebildet sind und das Kunststoffmaterial des Eingriffsabschnitts weicher als das Kunststoffmaterial des Verschlußabschnitts ist, und wobei das Kunststoffmaterial des Eingriffsabschnitts durch Erwärmen so erweichbar ist, daß eine dichte Verbindung zwischen dem Eingriffsabschnitt und den von diesem aufgenommenen Bereichen der Fahrzeugkarosserie entsteht.

Vorteilhafte Ausgestaltungen der Erfindung sind in den Unteransprüchen angegeben.

Der erfindungsgemäße Karosseriestopfen wird vorzugsweise in eine grundierte Fahrzeugkarosserie montiert, die anschließend mit einer Lackierung versehen und durch eine Lacktrocknungsanlage geführt wird. Durch die in der Lacktrocknungsanlage herrschende Temperatur dichtet der Stopfen durch das Erweichen und gegebenenfalls Verschmelzen des weichen Eingriffsabschnitts mit den Lochkanten das Loch beidseitig ab. Bei einer Anwendung nach der Lackierung gewährleistet der durch den Verschlußabschnitt ausgeübte beidseitige Anpreßdruck auf die im Eingriffsabschnitt vorhandenen Dichtlippen eine sichere Versiegelung, ohne daß der Eingriffsabschnitt auf das Blech aufgeschmolzen wird.

Die Erfindung gewährleistet somit eine vollständige und dauerhafte Versiegelung der Blechkanten von Löchern in der Fahrzeugkarosserie und den damit verbundenen Schutz vor Korrosion.

Weitere Vorteile der Erfindung ergeben sich aus der nachfolgenden Beschreibung einer bevorzugten Ausführungsform in Verbindung mit der beigefügten Zeichnung. In der Zeichnung zeigen:

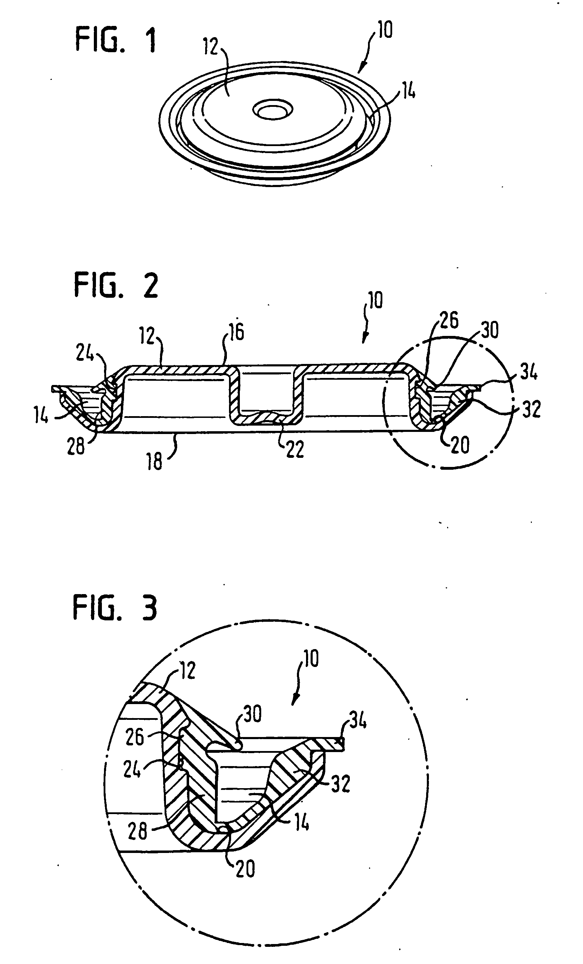

- Figur 1 eine perspektivische Ansicht eines erfindungsgemäßen Karosseriestopfens;
- Figur 2 eine Schnittansicht durch den erfindungsgemäßen Karosseriestopfen aus Figur 1; und
- Figur 3 ein Detail der Figur 2.

Der in den Figuren gezeigte Stopfen 10 weist einen zentralen Verschlußabschnitt 12 und einen randseitig angeordneten Eingriffsabschnitt 14 zur Aufnahme von Bereichen der Fahrzeugkarosserie, beispielsweise Blechlochkanten oder Kragenlochkanten, auf.

Der hier im wesentlichen hohlzylinderförmig gebildete Verschlußabschnitt 12 besteht aus einem relativ harten Kunststoffmaterial, beispielsweise einem Polyester-Ester-Elastomer mit einer Härte im Bereich von etwa 55 Shore D, (z.B. Arnitel, erhältlich von DSM, Niederlande). Ein Ende 16 des hohlzylinderförmigen Verschlußabschnitts 12 ist unter Ausbildung eines Bodens verschlossen. Das gegenüberliegende Ende 18 ist offen und unter Ausbildung einer randseitigen Vertiefung 20 nach außen in Richtung auf das verschlossene Ende 16 umgebogen. Am Boden des Verschlußabschnitts 12 ist vorzugsweise ein mittig angeordneter, in den Hohlzylinder gerichteter Vorsprung 22 ausgebildet, der die mechanische Stabilität und die Montierbarkeit des Stopfens verbessert.

Der in die randseitige Vertiefung 20 eingebrachte Eingriffsabschnitt 14 weist einen im wesentlichen U- oder V-förmigen Querschnitt mit zwei gegenüberliegenden Seitenwänden 28, 32 auf und besteht aus einem Kunststoffmaterial, welches weicher ist als das Kunststoffmaterial des Verschlußabschnitts 12. Als Kunststoffmaterial für den Eingriffsabschnitt 14 kann beispielsweise ein thermoplastischer Kautschuk mit einer Härte im Bereich von etwa 85 Shore A (z.B. Santoprene, erhältlich von Advanced Elastomer Systems, Belgien), verwendet werden. Vorzugsweise zeigt das Kunststoffmaterial des Eingriffsabschnitts 14 eine Schmelztemperatur von zwischen etwa 150 und 200°C. Dies gewährleistet, daß bei den in üblichen Lacktrocknungsanlagen herrschenden Temperaturen eine Verschmelzung des Kunststoffmaterials mit den im Eingriffsabschnitt aufgenommenen Blechkanten und damit eine sichere Versiegelung der Karosserielöcher erfolgt.

Der Eingriffsabschnitt 14 ist hier als separates Einlegeteil hergestellt und in die randseitige Vertiefung 20 des Verschlußabschnitts 14 eingelegt. Der hohlzylinderförmige Verschlußabschnitt 12 weist an seiner Außenfläche eine umlaufende Ausnehmung 24 auf, in welche ein korrespondierender Vorsprung 26 am Eingriffsabschnitt 14 eingreift. Damit wird eine formschlüssige Verbindung zwischen dem Eingriffsabschnitt 14 und dem Verschlußabschnitt 12 hergestellt. Der Eingriffsabschnitt kann allerdings auch mit dem Verschlußabschnitt 12 verklebt werden. Ferner ist es möglich, den Eingriffsabschnitt 14 in einer Spritzform an den Verschlußabschnitt 12 anzuformen, wodurch ebenfalls eine feste klebende Verbindung erreicht werden kann.

Der Eingriffsabschnitt 14 weist ferner an seiner an dem Verschlußabschnitt 12 anliegenden Seitenwand 28 eine umlaufende, seitlich vorstehende Dichtlippe 30 auf, die nach der Montage des Stopfens 10 in das Karosserieloch eine Rastverbindung mit der Blechlochkante ausbildet. Die der ersten Seitenwand 28 des Eingriffsabschnitts 14 gegenüberliegende Seitenwand 32 übergreift den Rand des Verschlußabschnitts 12 und bildet damit eine weitere Dichtlippe 34 aus, die im Gebrauch an der entgegengesetzten Seite der Blechlochkante angreift. Der Verschlußabschnitt 12 erzeugt dabei einen federnd elastischen Druck und preßt somit Dichtlippen 30, 34 von entgegengesetzten Seiten an die Blechlochkante in der Karosserie an. Damit ist eine sichere Versiegelung auch dann gewährleistet, wenn der Karosseriestopfen 10 nach der Lackierung montiert wird und keine Verschmelzung des Eingriffsabschnitts 14 mit der Blechlochkante erfolgt.

Zur Anwendung des erfindungsgemäßen Karosseriestopfens 10 wird der Stopfen in die Löcher einer grundierten Fahrzeugkarosserie montiert. Die Karosserie wird anschließend lackiert und durch eine Lacktrocknungsanlage geführt. Durch die in der Lacktrocknungsanlage herrschende hohe Temperatur und den Anpreßdruck des harten Verschlußabschnitts 12 wird der aus einem weichen Kunststoffmaterial bestehende Eingriffsabschnitt 14 von beiden Seiten gegen die Blechlochkante gedrückt und mit dem Blech verschmolzen. Hierdurch wird das Karosserieloch sicher versiegelt; gleichzeitig können auch Unebenheiten im Blech bis zu einem gewissen Grad ausgeglichen werden. Nach der Abkühlung der lackierten Karosserie und des Stopfens 10 und der damit verbundenen Erstarrung des weichen Kunststoffmaterials wird eine vollständige und dauerhafte Versiegelung der Blechlochkanten erreicht. Aufgrund dieser Versiegelung ist eine Anwendung des Karosseriestopfens auch bei unterschiedlichen Kragenlochhöhen bzw. Blechdicken möglich. Auch in diesem Fall ist ein dauerhafter Schutz gegen Feuchtigkeit und Korrosion gewährleistet.

Bei einer Anwendung des Stopfens 10 nach der Fahrzeuglackierung und ohne Erwärmung wird die Versiegelung der Blechlochkanten auch allein durch den von dem harten Verschlußabschnitt 12 auf den weichen Eingriffsabschnitt 14 ausgeübten Anpreßdruck erreicht. Die Erfindung ermöglicht somit eine beidseitige Versiegelung der Blechlochkanten in einer Fahrzeugkarosserie sowohl vor der Lackierung als auch nach der Lackierung.

## Patentansprüche

1. Stopfen (10) zur Abdichtung von Löchern in einer Fahrzeugkarosserie mit einem zentralen Verschlußabschnitt (12) und einem randseitig angeordneten Eingriffsabschnitt (14) zur Aufnahme von Bereichen der Fahrzeugkarosserie, wobei der Verschlußabschnitt (12) und der Eingriffsabschnitt (14) aus einem Kunststoffmaterial gebildet sind und das Kunststoffmaterial des Eingriffsabschnitts (14) weicher als das Kunststoffmaterial des Verschlußabschnitts (12) ist, und wobei das Kunststoffmaterial des Eingriffsabschnitts (14) durch Erwärmen so erweichbar ist, daß eine dichte Verbindung zwischen dem Eingriffsabschnitt (14) und den von diesem aufgenommenen Bereichen der Fahrzeugkarosserie entsteht, wobei der Eingriffsabschnitt eine umlaufende Dichtlippe (30), die eine Rastverbindung mit einer Karosserielochkante bildet, und eine weitere Dichtlippe (34) aufweist, die an der entgegengesetzten Seite der Karosserielochkante angreift, **dadurch gekennzeichnet, daß** der Eingriffsabschnitt (14) in eine randseitige Vertiefung (20) im Verschlußabschnitt (12) eingebracht ist.

2. Stopfen nach Anspruch 1, **dadurch gekennzeichnet, daß** der Verschlußabschnitt (12) und der Eingriffsabschnitt (14) miteinander formschlüssig verbunden sind.

3. Stopfen nach Anspruch 1 oder 2, **dadurch gekennzeichnet, daß** der Verschlußabschnitt (12) und der Eingriffsabschnitt (14) miteinander klebend verbunden sind.

4. Stopfen nach einem der Ansprüche 1 bis 3, **dadurch gekennzeichnet, daß** das Erweichen des Eingriffsabschnitts (14) bei einer Temperatur von zwischen 150 und 200 °C erfolgt.

5. Stopfen nach einem der Ansprüche 1 bis 4, **dadurch gekennzeichnet, daß** der Verschlußabschnitt (12) den Eingriffsabschnitt (14) federnd elastisch an die Karosseriebereiche anpreßt.

6. Stopfen nach einem der Ansprüche 1 bis 5, **dadurch gekennzeichnet, daß** der Verschlußabschnitt (12) hohlzylinderförmig mit einem verschlossenen Ende (16) und einem offenen Ende (18) ausgebildet ist, wobei das offene Ende (18) unter Ausbildung der randseitigen Vertiefung (20) nach außen in Richtung auf das verschlossene Ende (16) umgebogen ist.

7. Stopfen nach Anspruch 6, **dadurch gekennzeichnet, daß** der hohlzylinderformige Verschlußabschnitt (12) eine an seiner Außenfläche umlaufende Ausnehmung (24) aufweist, in welche der Eingriffsabschnitt (14) unter Ausbildung einer formschlüssigen Verbindung eingreift.

8. Stopfen nach Anspruch 6 oder 7, **dadurch gekennzeichnet, daß** der Eingriffsabschnitt (14) zwei einander gegenüberliegende Seitenflächen (28, 32) aufweist, wobei die erste Seitenfläche (28) an der Außenfläche des hohlzylinderförmigen Verschlußabschnitts (12) anliegt und die zweite gegenüberliegende Seitenfläche (32) den Rand des Verschlußabschnitts (12) übergreift.

## Claims

1. A plug (10) for sealing holes in a vehicle body, comprising a central closure section (12) and an engaging section (14) arranged on the rim and provided for receiving portions of the vehicle body, the closure section (12) and the engaging section (14) being made of a plastics material and the plastics material of the engaging section (14) being softer than the plastics material of the closure section (12), and the plastics material of the engaging section (14) being adapted to be softened by heating such that a tight connection is produced between the engaging section (14) and the portions of the vehicle body that are received by it, the engaging section having a surrounding sealing lip (30) which forms a latching connection with an edge of the hole in the vehicle body, and a further sealing lip (34) which engages the opposite side of the edge of the hole in the vehicle body, **characterized in that** the engaging section (14) is inserted in a deepening (20) on the rim of the closure section (12).

2. The plug according to claim 1, **characterized in that** the closure section (12) and the engaging section (14) are connected with each other by an interlocking fit.

3. The plug according to claim 1 or 2, **characterized in that** the closure section (12) and the engaging section (14) are bonded to each other by gluing.

4. The plug according to any of claims 1 to 3, **characterized in that** the softening of the engaging section (14) is performed at a temperature of between 150 and 200 °C.

5. The plug according to any of claims 1 to 4, **characterized in that** the closure section (12) presses the engaging section (14) against the vehicle body portions in a resilient and elastic fashion.

6. The plug according to any of claims 1 to 5, **characterized in that** the closure section (12) is formed so as to have a hollow cylindrical shape with a closed end (16) and an open end (18), the open end (18) being bent outwards toward the closed end (16), forming the deepening (20) on the rim.

7. The plug according to claim 6, **characterized in that** the hollow cylindrical closure section (12) has a surrounding recess (24) on its outer surface, the engaging section (14) engaging in the recess (24) to form an interlocking fit.

8. The plug according to claim 6 or 7, **characterized in that** the engaging section (14) has two side surfaces (28, 32) located opposite each other, the first side surface (28) lying against the outer surface of the hollow cylindrical closure section (12) and the second, opposite side surface (32) reaching beyond the rim of the closure section (12).

## Revendications

1. Bouchon (1) pour étancher des trous dans une carrosserie de véhicule, comportant un tronçon de fermeture central (12) et un tronçon d'engagement (4) agencé sur le bord, destiné à recevoir des régions de la carrosserie de véhicule, le tronçon de fermeture (12) et le tronçon d'engagement (4) étant réalisés en une matière plastique, et la matière plastique du tronçon de fermeture (12) étant plus molle que la matière plastique d'engagement (14), et la matière plastique du tronçon d'engagement (14) pouvant être ramollie par réchauffement de telle sorte qu'il se produit une liaison étanche entre le tronçon d'engagement (14) et les régions de la carrosserie reçues par celui-ci, le tronçon d'engagement présentant une lèvre d'étanchéité (30) périphérique, qui forme une liaison par enclenchement avec une arête de trou de carrosserie, et une autre lèvre d'étanchéité (34) qui s'engage sur le côté opposé de l'arête de trou de carrosserie, **caractérisé en ce que** le tronçon d'engagement (14) est ménagé dans un renfoncement (20) sur le bord dans le tronçon de fermeture (12).

2. Bouchon selon la revendication 1, **caractérisé en ce que** le tronçon de fermeture (12) et le tronçon d'engagement (14) sont reliés l'un à l'autre par coopération de formes.

3. Bouchon selon la revendication 1 ou 2, **caractérisé en ce que** le tronçon de fermeture (12) et le tronçon d'engagement (14) sont reliés l'un à l'autre par collage.

4. Bouchon selon l'une des revendications 1 à 3, **caractérisé en ce que** le ramollissement du tronçon d'engagement est effectué à une température entre 150 et 200°C.

5. Bouchon selon l'une des revendications 1 à 4, **caractérisé en ce que** le tronçon de fermeture (12) presse le tronçon d'engagement (14) de manière élastique à effet de ressort sur les régions de carrosserie.

6. Bouchon selon l'une des revendications 1 à 5, **caractérisé en ce que** le tronçon de fermeture (12) est réalisé cylindrique creux avec une extrémité fermée (16) et une extrémité ouverte (18), l'extrémité ouverte (18) étant repliée vers l'extérieur en direction de l'extrémité fermée (16) en réalisant un renfoncement (20) sur le bord.

7. Bouchon selon la revendication 6, **caractérisé en ce que** le tronçon de fermeture (12) cylindrique creux présente sur sa surface extérieure un évidement (24) périphérique dans lequel s'engage le tronçon d'engagement (14) en réalisant une liaison par coopération de formes.

8. Bouchon selon la revendication 6 ou 7, **caractérisé en ce que** le tronçon d'engagement (14) présente deux surfaces latérales (28, 32) opposées l'une à l'autre, la première surface latérale (28) étant en appui sur la surface extérieure du tronçon de fermeture (12) cylindrique creux et la deuxième surface latérale (32) opposée chevauchant le bord du tronçon de fermeture (12).
